(19) Europäisches Patentamt
European Patent Office
Office européen des brevets

(11) **EP 3 984 695 A2**

(12) **EUROPÄISCHE PATENTANMELDUNG**

(43) Veröffentlichungstag:
   **20.04.2022   Patentblatt 2022/16**

(21) Anmeldenummer: **21199479.3**

(22) Anmeldetag: **28.09.2021**

(51) Internationale Patentklassifikation (IPC):
   **B23Q 17/09** (2006.01)   **B23Q 17/12** (2006.01)
   **B23B 31/02** (2006.01)

(52) Gemeinsame Patentklassifikation (CPC):
   **B23Q 17/0966; B23Q 17/0976; B23Q 17/12**

(84) Benannte Vertragsstaaten:
   **AL AT BE BG CH CY CZ DE DK EE ES FI FR GB GR HR HU IE IS IT LI LT LU LV MC MK MT NL NO PL PT RO RS SE SI SK SM TR**
   Benannte Erstreckungsstaaten:
   **BA ME**
   Benannte Validierungsstaaten:
   **KH MA MD TN**

(30) Priorität: **19.10.2020   DE 102020127510**

(71) Anmelder: **Haimer GmbH**
   **86568 Hollenbach-Igenhausen (DE)**

(72) Erfinder: **Grosch, Thomas**
   **64285 Darmstadt (DE)**

(54) **ZUSTANDSÜBERWACHUNG BEI EINEM WERKZEUGHALTER MIT MESSVORRICHTUNG**

(57)   Bei dem Verfahren (100) zur Überwachung eines Betriebsverhaltens eines Werkzeughalters (1) wird unter Verwendung von zumindest zwei Messachsensignale (x, y) von zumindest zwei radial ausgerichteter Messachsen (x, y) eines bei dem Werkzeughalter vorgesehenen Sensors (9) ein resultierendes Messachsensignal (eine Resultierende (R)) gebildet und die Überwachung unter Verwendung des resultierenden Messachsensignals bzw. der Resultierenden (R) durchführt.

FIG 12

EP 3 984 695 A2

**Beschreibung**

Die Erfindung betrifft ein Verfahren zur Überwachung eines Betriebsverhaltens eines Werkzeughalters.

Ein solches Verfahren ist beispielsweise aus "In-Process Control with a Sensory Tool Holder to Avoid Chatter", F. Bleicher, et al., Journal of Machine Engineering, 2018, Vol. 18, No. 3, 16-27, "Using Sensory Tool Holder Data for Optimizing Production Processes", P. Schörghofer, et al., Journal of Machine Engineering, 2019, Vol. 19, No. 3, 43-55, oder "Method for Determining Edge Chipping in Milling based on Tool Holder Vibration Measurements", F. Bleicehr, et al., CIRP Annals - Manufacturing Technology 69 (2020) 101-104 bekannt.

Der hier zu überwachende Werkzeughalter ist dabei zur Rotation um eine eine axiale Richtung definierende Werkzeughalter-Drehachse (D) ausgebildet und sieht an seinem einen axialen Längsende einen Werkzeugabschnitt mit einer Werkzeugaufnahmeformation zur Aufnahme eines Werkzeugs sowie an seinem anderen axialen Längsende einen Kopplungsabschnitt mit einer Kopplungsformation zur Drehmoment übertragenden Kopplung mit einer Maschinenspindel einer Werkzeugmaschine vor.

Ferner weist der zu überwachende Werkzeughalter eine Messvorrichtung zur Erfassung von einen Betrieb des Werkzeughalters betreffende Daten auf, welche Messvorrichtung ein einachsiger Beschleunigungssensor mit einer einzelnen radial zur Werkzeughalter-Drehachse (D) ausgerichteten Messachse ist, wobei der Beschleunigungssensor so ein dieser radialen Messachse zugeordnetes Messachsensignal generiert.

Die Überwachung des Betriebsverhaltens bei diesem Werkzeughalter, beispielsweise eine Beobachtung von Vibrationen oder eine Erkennung von Instabilitäten, wie eines Ratterns, bei dem Werkzeughalter - hier bei einem Fräsen (hier ist dann in der Werkzeugaufnahmeformation des Werkzeughalters ein Fräswerkzeug aufgenommen) -, erfolgt so, dass das während des Fräsens gemessene Messachsensignal des einachsigen Beschleunigungssensors im Zeitverlauf oder im Frequenzspektrum analysiert wird. So können beispielsweise "abnorme" (wie beispielsweise sprunghafte) Veränderungen des Messachsensignals des einachsigen Beschleunigungssensors im Zeitverlauf auf eine Instabilität hinweisen.

Nachteilig bei dieser - beispielhaft herangezogenen - Überwachung einer Fräsbearbeitung mittels eines solchen Werkzeughalters mit Messvorrichtung/Beschleunigungssensors kann sein, dass die von der Messvorrichtung des Werkzeughalters für den Bearbeitungsvorgang gelieferten Signale/Daten, insbesondere ohne eine geeignete Auswertemethode, den Betrieb des Werkzeughalters, wie hier den Fräsprozess, nur unzureichend bzw. mit minderer Aussagekraft abbilden -, wodurch die (Prozess-)Überwachung auch nur unzureichend erfolgen kann. Kurz, der Werkzeughalter mit Messvorrichtung liefert hier (Prozess-)Signal/(Prozess-)Daten, welche nur schwer in Hinblick auf den Prozess interpretiert werden können.

Es ist daher Aufgabe der vorliegenden Erfindung, ein Verfahren zur Überwachung eines Betriebsverhaltens eines Werkzeughalters mit einer Messvorrichtung zur Verfügung zu stellen, welcher Nachteile aus dem Stand der Technik vermeidet, insbesondere den Stand der Technik derart weiterbildet, dass es möglich ist, einen Betrieb und/oder ein Betriebsverhalten bzw. einen Bearbeitungsprozess bei einem bzw. eines Werkzeughalters mit verbesserter Aussagekraft abzubilden und zu überwachen.

Diese Aufgabe wird gelöst durch ein Verfahren zur Überwachung eines Betriebsverhaltens eines Werkzeughalters mit den Merkmalen des unabhängigen Anspruchs. Vorteilhafte Weiterbildungen der Erfindung sind Gegenstand abhängiger Ansprüche sowie der nachfolgenden Beschreibung.

Verwendete Begriffe, wie oben, unten, vorne, hinten, links oder rechts sind - soweit nicht anders explizit definiert - nach üblichen Verständnis zu verstehen. Begriffe, wie radial und axial, sind in Bezug auf eine Werkzeughalter-Drehachse (D) des Werkzeughalters zu verstehen.

Der Begriff "im Wesentlichen" kann (nach höchstrichterlichem Verständnis) dahingehend verstanden werden, dass mit ihm von "einem praktisch noch erheblichen Maße" die Rede ist. Durch diese Begrifflichkeit so implizierte, mögliche Abweichungen vom Exakten, können sich so ohne Absicht (also ohne funktionale Begründung) aufgrund von Fertigungs- oder Montagetoleranzen o.ä. ergeben.

Das Verfahren zur Überwachung eines Betriebsverhaltens eines Werkzeughalters sieht einen Werkzeughalter vor, welcher zur Rotation um eine eine axiale Richtung definierende Werkzeughalter-Drehachse (D) ausgebildet ist.

Weiter sieht der zu überwachende Werkzeughalter an seinem einen axialen Längsende einen Werkzeugabschnitt mit einer Werkzeugaufnahmeformation zur Aufnahme eines Werkzeugs sowie an seinem anderen axialen Längsende einen Kopplungsabschnitt mit einer Kopplungsformation zur Drehmoment übertragenden Kopplung mit einer Maschinenspindel einer Werkzeugmaschine vor. Weiter auch weist der zu überwachende Werkzeughalter eine Messvorrichtung zur Erfassung von einen Betrieb des Werkzeughalters betreffende Daten auf.

Diese Messvorrichtung ist ein Sensor, insbesondere ein Beschleunigungssensor, mit zumindest zwei Messachsen (beispielsweise bezeichnet mit x und y), welche zwei Messachsen (x, y) im Wesentlichen radial zur Werkzeughalter-Drehachse (D) ausgerichtet sind.

Gegebenenfalls kann es zweckmäßig sein, wenn die zumindest zwei Messachsen (beispielsweise bezeichnet mit x und y), welche zwei Messachsen (x, y) im Wesentlichen radial zur Werkzeughalter-Drehachse (D) ausgerichtet sind, darüber hinaus auch noch orthogonal zueinander ausgerichtet sein.

Zweckmäßig kann es weiter hier auch sein, die zumindest zwei Messachsen, welche im Wesentlichen radial zur Werkzeughalter-Drehachse (D) ausgerichtet sind, zu Ausrichtungsmerkmalen des Werkzeughalters, wie bspw. Deutsches Eck oder Mitnehmer beim HSK, auszurichten. Mit einer ausreichend schnellen Kommunikation (Echtzeit) zu einer Maschinensteuerung kann so eine Zuordnung eines Drehwinkels möglich sein. Damit wäre eine Art Zeigerdarstellung von Schwingungen in Maschinenkoordinaten möglich.

Die Messvorrichtung kann aber auch andere Sensorsysteme umfassen, die richtungsabhängige Signale liefern, wie z. B ein Kraft-, Geschwindigkeits- oder Verformungssensor oder ein Wegmesssystem.

Im Folgenden wird die Erfindung beispielhaft mit Verwendung bzw. anhand eines Beschleunigungssensors erläutert.

Der Beschleunigungssensor liefert zumindest zwei den zumindest zwei (radialen) Messachsen zugeordnete Messachsensignale, - welche - ausgewertet bzw. interpretiert, im Allgemeinen verarbeitet, - als (Mess-)Daten den Betrieb des Werkzeughalters beschreiben bzw. abbilden, beispielsweise - entsprechend den Messachsen x und y - auch x und y bezeichnet.

Der Einfachheit halber können die Begriffe (Mess-)Signale, (Mess-)Werte und (Mess-)Daten auch synonym zueinander verwendet werden.

Bei dem Verfahren zur Überwachung eines Betriebsverhaltens eines Werkzeughalters wird dann unter Verwendung der zumindest zwei Messachsensignale ein resultierendes Messachsensignal, kurz im Folgenden nur "Resultierende" (R), gebildet - und die Überwachung unter Verwendung der Resultierenden durchführt.

Dabei mag unter dem resultierenden Messachsensignal bzw. der Resultierenden der zumindest zwei Messachsensignale, wie im Bereich der (mathematischen) Mechanik üblich, eine (Vektor-)Summe verstanden werden, wie aber auch jede beliebige (mathematische Berechnungs-)Vorschrift, welche die zwei Messachsensignale gemeinsam einer mathematischen Operation unterzieht, deren Ergebnis dann die resultierende darstellt.

Kurz, mathematisch ausgedrückt, R = f(x, y), wobei f für die mathematische Berechnungsvorschrift steht.

So kann beispielsweise die Resultierende (R) nach folgender Vorschrift gebildet werden:

$$R(x_i) = Sqr(Sum(x_i^2)) \tag{1}$$

mit:

$x_i$     Messachsensignal der Achse i
Sqr     Quadratwurzel
Sum    Summe

((1) auch vektoriell, insbesondere bei nicht-orthogonal ausgerichteten Sensoren)

Dem Verfahren liegt die Erkenntnis zugrunde, dass einerseits ein derartig ausgebildeter und beim Werkzeughalter angeordneter Beschleunigungssensor - mit zumindest zwei Messachsen, welche im Wesentlichen radial zur Werkzeughalter-Drehachse (D) ausgerichtet sind, - besser in der Lage ist, durch die von ihm erzeugten (Mess-)Signale/(Mess-)Daten den Betrieb des Werkzeughalters zu beschreiben bzw. abzubilden - und so aussagekräftiger einen Bearbeitungsprozess mit einem (derartig sensorisierten) Werkzeughalter zu beschreiben.

Andererseits liefert dann auch erst die aus den unter Verwendung der zumindest zwei Messachsensignale gebildete Resultierende ein aussagekräftiges Abbild des Bearbeitungsprozesses.

Zuverlässigere Analysen und verbesserte Vorhersagen, wie beispielsweise abnormale Betriebszustände, Instabilitäten, Werkzeugbrüche oder Werkzeugverschleiß, sind damit möglich.

Versuche mit mit Sensoren ausgestatteten Werkzeughalter haben gezeigt, dass insbesondere einfache einachsige Sensoren bzw. Werkzeughalter mit einfachen einachsigen Sensoren, weniger aussagekräftigere Daten über Bearbeitungsprozesse liefern können, welche so weniger zuverlässig abnormale Betriebszustände, Instabilitäten, Werkzeugbrüche, Werkzeugverschleiß oder Ähnliches erkennen lassen.

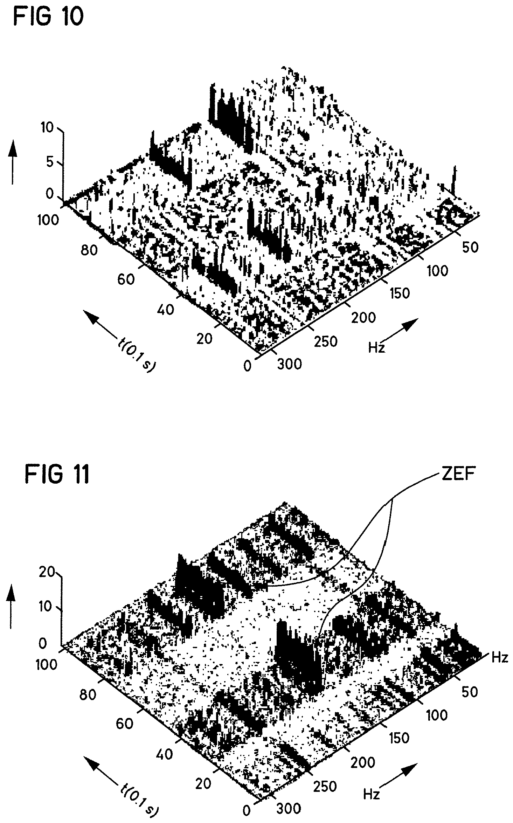

FIG 10 zeigt so beispielsweise Bearbeitungs-/Sensordaten eines Werkzeughalters, hier einen Schaftfräser mit Zähnezahl z = 4, mit einen einachsigen Beschleunigungssensor - mit radial (32) ausgerichteter Messachse. Die Prozessparameter sind n = 2400 U/min, ap (Schnitttiefe) = 2 mm und $a_e$ (Arbeitseingriff) = 4 mm.

FIG 10 zeigt dabei - in 3D-Darstellung - eine Spektralanalyse über der Zeit (Spektogramm). Die Zeitachse verläuft hierbei von unten nach links und die Frequenzen steigen von rechts nach unten. Die erwartete Zahneingriffsfrequenz liegt bei 160 Hz. Diese ist auf den ersten Blick in FIG 10 nicht zu erkennen.

FIG 11 zeigt demgegenüber Bearbeitungs-/Sensordaten eines Werkzeughalters, hier wieder den Schaftfräser mit Zähnezahl z = 4, mit in diesem Fall einen zweiachsigen Beschleunigungssensor - mit zwei, orthogonalen, radial (32) ausgerichteten Messachsen (x, y). Die zwei (Mess-/Messachsen-)Signale x, y bzw. deren (Mess-)Daten wurden zu einer Resultierenden $R_{xy}$ nach der Vorschrift

$$R(x_i) = Sqr(Sum(x_i^2)) \tag{1}$$

mit:

xi    Messachsensignal der Achse i
Sqr   Quadratwurzel
Sum   Summe

zusammengefasst.

Die Prozessparameter sind wiederum n = 2400 U/min, $a_P$ (Schnitttiefe) = 2 mm und $a_e$ (Arbeitseingriff) = 4 mm.

FIG 11 zeigt - in 3D-Darstellung - wieder die Spektralanalyse über der Zeit. Die Zeitachse verläuft hierbei wieder von unten nach links und die Frequenzen steigen wieder von rechts nach unten. Die erwartete Zahneingriffsfrequenz liegt wieder bei 160 Hz - und ist dieses Mal eindeutig als dominante Frequenz in FIG 11 zu erkennen (gekennzeichnet mit ZEF).

Es zeigt sich somit, dass der zumindest zweiachsige Beschleunigungssensor in Kombination mit der aus seinen Messsignalen gebildeten Resultierenden in der Lage sind, ein Betriebsverhalten eines Werkzeughalters abzubilden bzw. zu beschreiben, wodurch zuverlässig abnormale Betriebszustände, Instabilitäten, Werkzeugbrüche, Werkzeugverschleiß oder Ähnliches bei dem Werkzeughalter erkennbar werden.

Zweckmäßig ist es, wenn der Beschleunigungssensor auch eine dritte Messachse, beispielsweise bezeichnet als z, aufweist (, wobei entsprechende Messachsen-)Signale/-Werte/-Daten auch mit z bezeichnet werden können), wobei die dritte Messachse im Wesentlichen axial zur Werkzeughalter-Drehachse (D) ausgerichtet ist, der Beschleunigungssensor so auch ein drittes der dritten Messachse zugeordnetes Messachsensignal (z) liefert - und insbesondere die Resultierende (R) gegebenenfalls auch unter Verwendung des dritten Messachsensignals gebildet werden kann.

Gegebenenfalls kann das dritte Messachsensignal (7) aber auch separat ausgewertet werden, da die dritte Messachse bzw. z-Achse sich etwas anders verhalten kann (, da sie anders angeregt wird,) als die ersten Messachsen bzw. x und y-Achse, da die Hauptanregung in deren Messebene stattfindet.

Hierbei ist aus Zerspankraftversuchen mit Mehrkomponentendynamometern bereits bekannt, dass axiale Achssignale signifikante Signalveränderungen bei Instabilitäten aufzeigen.

Wird gegebenenfalls die dritte Messachse bzw. z-Achse anders angeregt, so kann sie gegebenenfalls zur Detektion von beispielsweise Rattern herangezogen werden, da diese Achse auch bei Kraftmessplattformen sehr starke Kraftsprünge beim Rattern zeigt.

Weiterhin kann vorgesehen sein, dass rohe oder bearbeitete Messachsensignale und/oder Daten drahtlos an eine Auswerteeinheit, insbesondere an ein Condition Monitoring System (CMS), übertragen werden. Dies kann beispielsweise nach bekannten (Funk-)Standards erfolgen und/oder mittels Bluetooth.

Ferner ist es zweckmäßig, wenn rohe oder bearbeitete Messachsensignale und/oder Daten statistisch bearbeitet werden, insbesondere geglättet, gefiltert oder einer Frequenzanalyse unterzogen werden.

Auch kann vorgesehen sein, dass rohe oder bearbeitete Messachsensignale und/oder Daten einer Transformation, insbesondere einer Koordinatentransformation von einem rotierenden System, beispielsweise einem mit dem Werkzeughalter mitrotierenden, durch die Messachsen aufgespanntes Koordinatensystem, in ein Inertialsystem, unterzogen werden.

Besonders zweckmäßig ist es, wenn der Beschleunigungssensor in der Werkzeughalter-Drehachse (D) oder nahe der Werkzeughalter-Drehachse (D) angeordnet ist. Die Positionierung des Beschleunigungssensors hat den Einfluss, dass die Drehzahl n quadratisch in eine Grundlast $a_{zp}$ (Zentripetalbeschleunigung) einfließt und so der Abstand des Beschleunigungssensors zur Werkzeughalter-Drehachse (D) für eine Überwachung hoher Drehzahlen so gering wie möglich gehalten werden sollte. Dadurch wird der Messbereich des Beschleunigungssensors nur unwesentlich eingeschränkt.

Der drehzahlabhängige Einfluss auf das Messergebnis zeigt sich im Zeitsignal durch eine Verschiebung der Amplitude mit der Höhe der Grundlast $a_{zp}$. Dies ist zu beachten, wenn die Schwingungsintensität im Zeitsignal für eine Auswertung in Betracht gezogen wird. Der gemessene Maximalwert entspricht dann nicht der Anregung durch den Prozess, sondern ist erst nach Abzug der Verschiebung aussagekräftig.

Bei geeigneter Kalibrierung des Messsystems ist es sogar möglich, einen Rundlauffehler des in die Maschinenspindel eingespannten Werkzeuges zu erkennen, indem die Grundlast $a_{zp}$ analysiert wird.

Bevorzugt kann auch vorgesehen sein, dass Prozess- und/oder Betriebsparameter einer sich mit dem Werkzeughalter in einen Bearbeitungsprozess/-betrieb befindender Werkzeugmaschine automatisch in Abhängigkeit der Überwachung angepasst und/oder verändert werden. Anschaulich und vereinfacht ausgedrückt, es ist zweckmäßig, mittels des Überwachungsergebnisses den Bearbeitungsprozess zu steuern und/oder regeln. Zeigt so beispielsweise das Überwachungsergebnis ein Rattern, so kann die Drehzahl der Werkzeugmaschine verändert werden - oder bei ersten Anzeichen eines bevorstehenden Werkzeugbruches kann die Werkzeugmaschine kontrolliert heruntergefahren werden.

Weiterhin ist es zweckmäßig, wenn der Werkzeughalter - neben dem Beschleunigungssensor - weitere Elektronikbauteile, insbesondere einen Mikrocontroller, eine oder mehrere Übertragungseinrichtungen, insbesondere eine oder mehrere Antennen, eine oder mehrere Leiterplatten und/oder eine oder mehrere Energieversorgungen aufweist.

Nach einer Weiterbildung ist vorgesehen, dass die Werkzeugaufnahmeformation beispielsweise ein Schrumpffutter oder ein Hydrodehnspannfutter oder eine Messerkopfaufnahme oder ein Spannzangenfutter oder ein Kraftspannfutter ist.

Auch kann die Kopplungsformation beispielsweise ein Hohlschaftkegel oder ein Steilkegel oder/und eine Eingriffsformation für ein Kugelspannsystem oder ein polygonförmiger Hohlschaft sein bzw. umfassen.

Bevorzugt lässt sich das Verfahren zu einer Erkennung eines abnormalen Betriebs-/Prozesszustands, insbesondere einer Instabilität und/oder eines Ratterns und/oder eines Verschleißes und/oder Bruches bei einem/eines in dem Werkzeughalter aufgenommenen Werkzeugs, einsetzen, wobei die Erkennung mittels einer Analyse unter Verwendung der Resultierenden erfolgt.

Auch kann das Verfahren zu einer automatischen Werkzeugmaschinensteuerung eingesetzt werden, wobei Prozess- und/oder Betriebsparameter der sich mit dem Werkzeughalter in einen Bearbeitungsprozess/-betrieb befindenden Werkzeugmaschine automatisch in Abhängigkeit der Überwachung angepasst und/oder verändert werden.

Weiterhin kann ein intelligenter ("smarter") Werkzeughalter vorgesehen sein - mit zumindest einem Werkzeughalter, welcher zur Rotation um eine eine axiale Richtung definierende Werkzeughalter-Drehachse (D) ausgebildet ist und an seinem einen axialen Längsende einen Werkzeugabschnitt mit einer Werkzeugaufnahmeformation zur Aufnahme eines Werkzeugs sowie an seinem anderen axialen Längsende einen Kopplungsabschnitt mit einer Kopplungsformation zur Drehmoment übertragenden Kopplung mit einer Maschinenspindel einer Werkzeugmaschine aufweist und welcher eine Messvorrichtung zur Erfassung von einen Betrieb des Werkzeughalters betreffende Daten aufweist, welche Messvorrichtung ein Beschleunigungssensor mit zumindest zwei Messachsen, welche zwei Messachsen im Wesentlichen radial zur Werkzeughalter-Drehachse (D) ausgerichtet sind, ist, welcher zumindest zwei den zumindest zwei Messachsen zugeordneten Messachsensignale liefert, sowie mit einer Auswertungseinheit, beispielsweise ein CMS, welche eingerichtet ist, das Verfahren - oder eine seiner Weiterbildungen auszuführen.

Kurz, ein solcher intelligenter Werkzeughalter sieht den nach dem Verfahren vorgesehenen Werkzeughalter (oder einen weitergebildeten Werkzeughalter) vor sowie eine Auswerteeinheit, welche das Verfahren (oder eine deren Weiterbildungen) durchführt.

Weiterbildend kann der Beschleunigungssensor verschiedentlich ausgebildet sein. So kann - nach einer Weiterbildung - vorgesehen sein, dass der Beschleunigungssensor (genau) zwei, insbesondere orthogonal zueinander ausgerichtete, Messachsen, aufweist. Nach einer anderen Weiterbildung kann der Beschleunigungssensor auch drei, in diesem Fall insbesondere ein orthogonales Koordinatensystem aufspannende, Messachsen, aufweisen, wobei - in diesem Fall - die dritte Messachse im Wesentlichen axial zur Werkzeughalter-Drehachse (D) ausgerichtet sein kann.

Zweckmäßig ist es auch, wenn die Resultierende (R) mittels einer Auswerteeinheit, wie beispielsweise eines Microprozessors/-kontrollers, oder in Rahmen eines Condition Monitoring (CM) bzw. in einem Condition Monitoring System (CMS) gebildet wird.

Ferner kann auch vorgesehen sein, dass der Beschleunigungssensor auf einer separaten Leiterplatte angeordnet ist, insbesondere auf einer anderen Leiterplatte als der Mikrocontroller. Hierdurch lassen sich flexiblere Anordnungen der Bauteile - auch als vorteilhafte modulare Bausysteme (mit flexibler Austauschmöglichkeit) - im Werkzeughalter realisieren.

Dabei kann die den Mikrocontroller tragende Leiterplatte als flexible Leiterplatte ausgebildet sein, was so eine günstige Einbausituation in den Werkzeughalter schaffen kann.

Auch die eine oder mehreren Übertragungseinrichtungen bzw. Antennen können auf einer bzw. mehreren separaten Leiterplatten angeordnet sein.

Derartig verteilte Anordnungen ermöglichen so einen vorteilhaften modularen Aufbau bei dem Werkzeughalter mit vereinfachter Austauschbarkeit.

Zweckmäßig kann es aber auch sein, wesentliche Komponenten in einer elektronischen Baueinheit, wie beispielsweise eine Sensor/μC-Kombination, auf einem Chip zusammenzufassen.

Zweckmäßigerweise kann die Antenne eine SMD (surface mounted device) - Antenne oder eine Drahtantenne oder eine selbstklebende Folienantenne sein. Hier kann auch vorgesehen sein, dass die SMD - Antenne oder die Drahtantenne auf einer separaten Leiterplatte angeordnet ist (modularer Aufbau/modulares System).

Weiterhin kann auch vorgesehen sein, dass eine Übertragungseinrichtung, insbesondere Antenne, und/oder eine Energieversorgung in einer Versenkung an einer Außenfläche des Werkzeughalters versenkt angeordnet ist.

Eine solche Versenkung kann zweckmäßig als kreisrunde Tasche an der Außenfläche des Werkzeughalters ausgebildet sein, welche Versenkung insbesondere vergossen, insbesondere mittels einer Silikonmasse, und/oder gedeckelt ist.

Nach einer Weiterbildung sind zwei oder mehrere Übertragungseinrichtungen, insbesondere zwei oder mehrere Antennen, insbesondere Drahtantennen, vorgesehen, welche insbesondere in Umfangsrichtung verteilt um die Werkzeughalter-Drehachse (D) angeordnet sind. Liegt so beispielsweise eine der zwei oder mehreren Antennen in einem Übertragungsschatten, so kann die andere bzw. die anderen Antennen (redundant) Daten übertragen. Eine ununterbrochene Datensendung kann so gewährleistet werden.

Ferner kann auch vorgesehen sein, dass eine oder mehrere Anschlussbohrungen schräg zu der Werkzeughalter-Drehachse (D) verläuft/verlaufen, insbesondere, dass eine Anschlussbohrung für eine Anschlussleitung des Beschleunigungssensors oder einer Antenne schräg zu der Werkzeughalter-Drehachse (D) verläuft. Schräge Bohrungen mit diesbezüglichen Kabelführungen helfen Kabelknickungen zu vermeiden - und machen so die Systeme ausfallsicherer.

Nach einer Weiterbildung ist auch vorgesehen, dass der Beschleunigungssensor eine SPI - Schnittstelle und/oder eine Elektronik bei dem Werkzeughalter SPI - Schnittstellen und/oder einen SPI - Bus aufweist. Kurz, bevorzugt werden bei dem Verfahren Werte/Daten/Signale über eine SPI - Schnittstelle übertrage. SPI - Schnittstellen bzw. -Bus lassen hohe Datenraten zu, beispielsweise höhere als I$^2$C - Schnittstellen.

Ferner kann es auch zweckmäßig sein, wenn eine Energieversorgung mittels eines, insbesondere kinetischen, Energy Harvesting erfolgt, wobei insbesondere eine Kühlmittelströmung bei dem Werkzeughalter für eine Energieerzeugung verwendet wird, insbesondere mittels einer Turbine in einem Kühlmittelkanal bei dem Werkzeughalter.

Alternativ - oder auch ergänzend lassen sich Energieversorgungen mittels Batterien und/oder Akkus vorstellen.

Insbesondere ist es zweckmäßig, wenn eine Werkzeugmaschine mit einem erfindungsgemäßen Verfahren mit erfindungsgemäßen Werkzeughalter oder wie beschrieben weitergebildeten Verfahren bzw. Werkzeughalter ausgestattet ist. Damit lassen sich so Prozesse auf der Werkzeugmaschine überwachen.

Die bisher gegebene Beschreibung der Erfindung und vorteilhafter Ausgestaltungen der Erfindung enthalten zahlreiche Merkmale, die in den einzelnen (Haupt-/Unter-)Ansprüche alleine sowie teilweise zu mehreren zusammengefasst wiedergegeben sind. Diese Merkmale können jedoch zweckmäßigerweise auch einzeln für einen/den Werkzeughalter betrachtet und/oder zu sinnvollen weiteren Kombinationen zusammengefasst werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert werden (gleiche Bauteile/Komponenten und Funktionen weisen in den Zeichnungen/Figuren gleiche Bezugszeichen auf).

Die Ausführungsbeispiele dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:

FIG 1      einen Werkzeughalter mit Spannfutter (hier Schrumpffutter) gemäß einer Ausführung,

FIG 2      einen Teil des Werkzeughalters gemäß FIG 1 mit Batteriefach und Antennentasche,

FIG 3      einen Blick auf den Werkzeughalter gemäß FIG 1 mit Position der (flexiblen) Hauptplatine,

FIG 4      eine (flexible) Hauptplatine mit Schutzfolie auf Vorder- und Rückseite und mit Sensoranschluss, Microcontroller (pC) und Antennenanschluss für den Werkzeughalter gemäß FIG 1,

FIG 5      die (flexible) Hauptplatine mit Sensoranschluss (Steckkontakte), Microcontroller (pC), Antennenanschluss, Programmierkontakte und Energieversorgungsanschluss (Steckkontakte) für den Werkzeughalter gemäß FIG 1,

FIG 6      einen Blick auf den Werkzeughalter gemäß FIG 1 mit Position des Sensors,

FIG 7      eine Sensorplatine mit dem Sensor und einer Verkabelung für den Werkzeughalter gemäß FIG 1,

FIG 8      die Sensorplatine mit dem Sensor und die (flexible) Hauptplatine verkabelt für den Werkzeughalter gemäß FIG 1,

FIG 9      einen Werkzeughalter mit Spannfutter (hier Schrumpffutter) gemäß einer weiteren Ausführung mit zwei Drahtantennen,

FIG 10     Bearbeitungs-/Sensordaten eines Werkzeughalters mit einem einachsigen Beschleunigungssensor (Zeitverlauf),

FIG 11     Bearbeitungs-/Sensordaten eines erfindungsgemäßen Werkzeughalters mit einem zweiachsigen Beschleunigungssensor mit zwei radialen Messachsen (Spektogramm),

FIG 12     eine schematische Darstellung eines Verfahrens zur Überwachung eines Betriebsverhaltens eines Werkzeughalters, beispielsweise den Werkzeughalter nach vorerwähnten Ausführungen,

FIG 13     die Resultierende R eines erfindungsgemäßen Werkzeughalters mit einem zweiachsigen Beschleunigungssensor mit zwei radialen Messachsen im Zeitverlauf bei einem Bearbeitungsprozess (Fräsbearbeitung),

FIG 14     das Spektogramm der Resultierende R eines erfindungsgemäßen Werkzeughalters mit einem zweiachsigen Beschleunigungssensor mit zwei radialen Messachsen im Zeitverlauf bei einem Bearbeitungsprozess (Fräsbearbeitung) nach FIG 13.

**Zustandsüberwachung mittels sensorischem Werkzeughalter**

**- Werkzeughalter 1 mit Sensorik (FIGen 1 bis 8)**

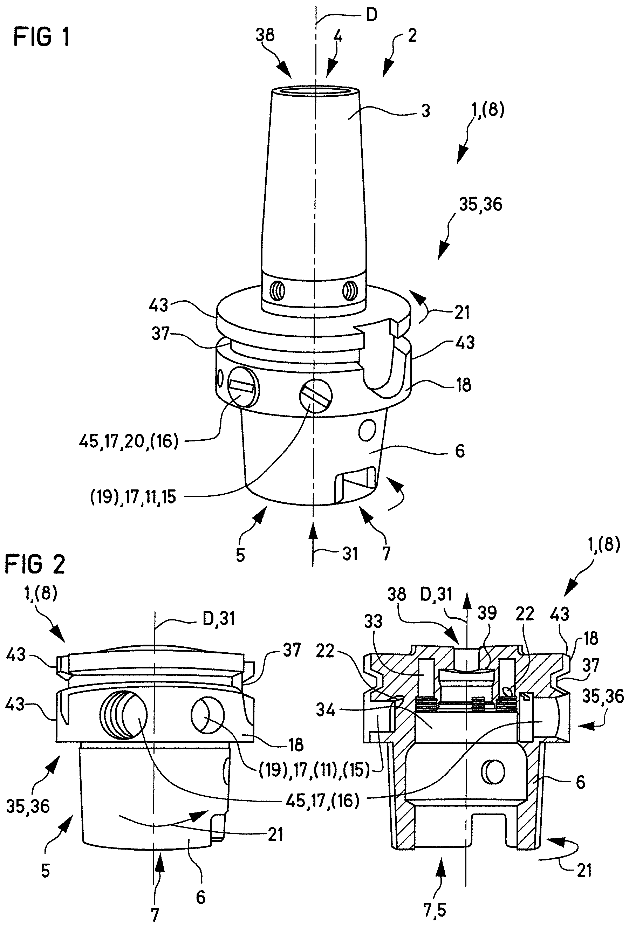

FIG 1 zeigt eine erste Ausführungsform eines erfindungsgemäßen Werkzeughalters 1, kurz im Folgenden nur Werkzeughalter 1 oder erster Werkzeughalter 1.

Der Werkzeughalter 1 umfasst einen Werkzeughalter-Grundkörper 35, welcher nachfolgend lediglich als Grundkörper 35 bezeichnet ist. Der Grundkörper 35 ist zur Erzielung einer möglichst hohen Steifigkeit hier einstückig ausgebildet. Er ist in üblicher Weise aus Metall hergestellt.

Einstückigkeit im Sinne der vorliegenden Anmeldung liegt auch dann vor, wenn ein Bauteil in einem additiven Verfahren, beispielsweise aus Metallpulver, generiert wird oder aus mehreren Bauteilen unlösbar, z. B. durch Verschweißen oder Löten, zusammengesetzt ist.

Der Werkzeughalter 1, welcher sich längs (axial 31) einer nachfolgend lediglich als Drehachse D bezeichneten Werkzeughalter-Drehachse D erstreckt, weist an seinem werkzeugseitigen Längsende 2 einen Werkzeugabschnitt 3 und an seinem entgegengesetzten kopplungsseitigen Längsende 5 einen Kopplungsabschnitt 6 auf.

Der Werkzeugabschnitt 3 umfasst eine Werkzeugaufnahmeformation 4 in Gestalt einer Werkzeugaufnahmeausnehmung 4. In diese Werkzeugaufnahmeausnehmung 4 ist vom werkzeugseitigen Längsende 2 her axial 31 ein Schaft eines (in FIG 1 nicht dargestellten) Werkzeuges einführbar.

Der Werkzeugabschnitt 3 des Werkzeughalters 1 ist in an sich bekannter Weise als Schrumpffutter ausgeführt, in welchem ein Schaft eines (in FIG 1 nicht dargestellten) Werkzeugs unter Ausnutzung der thermischen Ausdehnung und Schrumpfung des Materials des Grundkörpers gespannt sein kann.

Der Kopplungsabschnitt 6 umfasst in dem in FIG 1 gezeigten Beispiel eines Werkzeughalters 1 eine Kopplungsformation 7 in Gestalt eines Hohlschaftkegels - oder kurz HSK.

Wie an weiteren - nicht gezeigten - Ausführungsbeispielen gezeigt werden kann, kann der Werkzeugabschnitt 3 auch gemäß einem anderen Spannprinzip, wie eines Hydrodehnspannfutters, ausgebildet sein. Ebenso kann unabhängig davon der Kopplungsabschnitt 6 mit anderer Schaftgestalt ausgebildet sein.

Axial 31 zwischen dem Werkzeugabschnitt 3 und dem Kopplungsabschnitt 6 kann eine Handhabungsformation 36 zur Handhabung des Werkzeughalters 1 beispielsweise durch eine Greifervorrichtung vorgesehen sein. Die Handhabungsformation 36 kann, wie FIG 1 verdeutlicht, eine in Umfangsrichtung 21 um die Drehachse D umlaufende Greiferrille 37 umfassen.

Der Grundkörper 35 ist in dem in FIG 1 gezeigten Beispiel axial 31 vollständig von einer zentralen Ausnehmung 38 durchsetzt, von welcher die Werkzeugaufnahmeausnehmung 4 einen Axialabschnitt bildet, welcher unter anderem der Zufuhr von Kühlmittel durch den Werkzeughalter 1 zur Bearbeitungsstelle dienen kann, an welcher Bearbeitungsstelle das im Werkzeughalter 1 eingespannte Werkzeug (nicht dargestellt) mit einem zu bearbeitenden Werkstück in Bearbeitungseingriff steht, beispielsweise bei einem Fräswerkzeug in Fräsbearbeitung.

Zur Überwachung des Betriebs des Werkzeughalters 1 während der Werkstückbearbeitung ist der Werkzeughalter 1 mit einer Messvorrichtung 8 versehen.

Diese Messvorrichtung 8 ermöglicht es auch, beispielsweise abnorme Zustände, wie Werkzeugbrüche/-verschleiß, Vibrationen oder andere Instabilitäten, beispielsweise Rattern, bei dem Werkzeughalter 1 zu erkennen. Hierzu werden Signale/Daten der Messvorrichtung analysiert und ausgewertet/verarbeitet.

Die Messvorrichtung 8 sieht dazu verschiedene am Werkzeughalter 1 angeordnete, miteinander (über Kabel) verbundene Komponenten, wie einen Beschleunigungssensor 9, eine SMD-Antenne 11 einen Microcontroller ($\mu$C) 10 und eine Spannungs-/Energieversorgung bzw. Batterie 16, vor (vgl. insbesondere FIGen 2 bis 8), welche - einem modularen Aufbau folgend - wie nachfolgend beschrieben - meist auf separaten, untereinander über Anschlussleitungen/Kabel 23 (nicht dargestellt), 24, 25 verbundenen Platinen 12, 13, 14, 15, wie eine Hauptplatine 14 mit Microcontroller (pC) 10, eine (Sensor-)Platine 13 mit Beschleunigungssensor 9 und eine (Antennen-)Platine 15 mit SMD-Antenne 11, platziert sind.

- zweiachsiger Beschleunigungssensor 9

Wesentlicher Bestandteil der Messvorrichtung 8 ist, wie insbesondere die FIGen 6 bis 8 verdeutlichen, ein - in diesem Fall - zweiachsiger Beschleunigungssensor 9, dessen zwei Messachsen x und y orthogonal zueinander angeordnet sind.

Modular umgesetzt - und um unabhängig von anderen Komponenten der Messvorrichtung 8 zu sein, ist dieser Beschleunigungssensor 9 separat auf einer gesonderten (Sensor-)Platine 13 (vgl. FIGen 7 und 8) platziert.

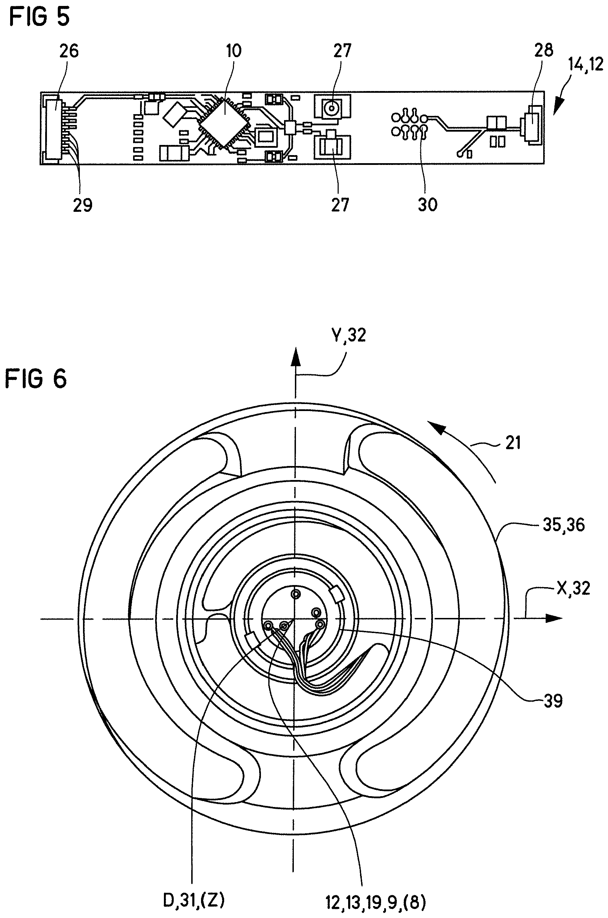

Um Zentrifugalkrafteinflüsse durch die Rotation des Werkzeughalters 1 auf den Beschleunigungssensor 9 so gering wie möglich zu halten, sitzt, wie insbesondere FIG 6 zeigt, der Beschleunigungssensor 9 im Mittelpunkt/auf der Drehachse D im Werkzeughalter 1, wobei die (orthogonal zueinander stehenden) Messachsen x und y normal zu Drehachse D ausgerichtet sind (und so radiale (32) Beschleunigungen in den Achsrichtungen x und y messen) (vgl. FIG 6).

Alternativ zu diesem zweiachsigen Beschleunigungssensor 9 kann auch ein dreiachsiger Beschleunigungssensor verwendet werden, dessen - dann - drei Messachsen x, y, z - in diesem Fall dann - ein orthogonales Koordinatensystem aufspannen - und dessen dritte Messachse z dann axial 31 zur Werkzeughalter-Drehachse (D) ausgerichtet ist (nicht gezeigt).

Die (Sensor-)Platine 13 ist, wie FIG 6 auch zeigt, in einem Gehäuse 39 eingeklebt, welches - an Stelle des Kühlmittelrohres - in den Werkzeughalter 1 eingeschraubt werden kann. Der Beschleunigungssensor 9 wird mittels Sofortklebstoff direkt auf das Gehäuse 39 geklebt.

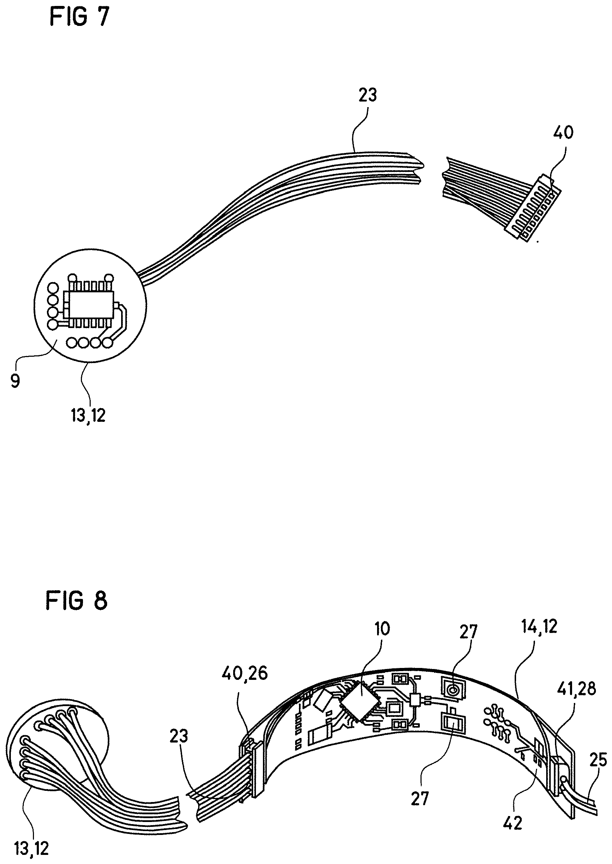

Die Verbindung zwischen der (Sensor-)Platine 13 und der Hauptplatine 14 ist, wie insbesondere FIG 8 und auch FIG 7 zu entnehmen ist, kabelgebunden (Anschlussleitung 23 für den Beschleunigungssensor 9 mit Stecker 40 für einen Steckkontakt 26 für die Anschlussleitung 23) realisiert. Ein entsprechender Steckkontakt 26 ist dafür, d.h. für den Stecker 40, auf der Hauptplatine 14 vorgesehen. Anstelle der Kabelverbindungen können zwischen den Komponenten auch drahtlose Verbindungen vorgesehen sein.

- Hauptplatine 14 mit Microcontroller ($\mu$C) 10

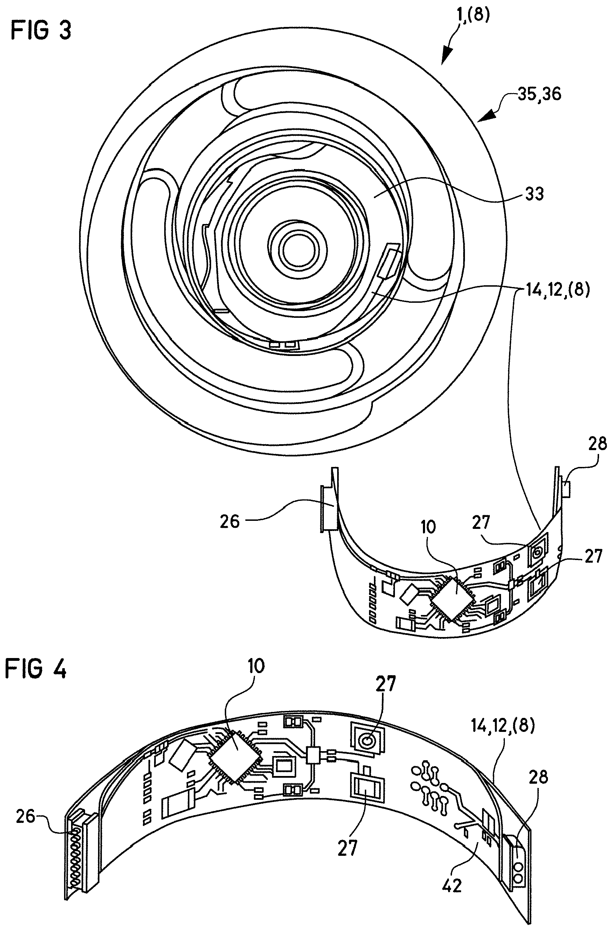

Zur Integration der den Microcontroller (pC) 10 tragenden Hauptplatine 14 in den Werkzeughalter 1 ist, wie FIG 3 zeigt, eine - zur Drehachse D konzentrische - kreis- bzw. ringförmige Nut 33 in den Werkzeughalter 1 eingebracht, welche um die zentrale Ausnehmung 38 im Werkzeughalter 1 bzw. den Bereich des (hier wegen des Beschleunigungssensors nicht dargestellten) Kühlmittelrohres verläuft.

Verschlossen wird, wie FIG 2 verdeutlicht, die ringförmige Nut 33 durch einen schraubbaren Deckel 34, was vorteilhaft ist, da diese Fläche Teil der HSK-Schnittstelle zum Ausstoßen des Werkzeughalters 1 aus der Spindel ist.

Analog zur (Sensor-)Platine 13 im Sensorgehäuse 39, wird die Hauptplatine 14 nach Montage aller Komponenten in der ringförmigen Nut 33 mittels Silikonschutzbeschichtung vergossen (19) .

Die Hauptplatine 14 ist, wie die FIGen 3 bis 5 verdeutlichen, als flexibles "Band" ausgeführt, da dies insbesondere für die Montage wesentliche Vorteile mit sich bringt. Eine flexible Platine kann ohne großen Aufwand in die Form der kreisförmigen Nut 33 gebracht werden (vgl. hier auch FIG 3 und FIG 4) und ist beim Anschluss der verschiedenen Verbindungsleitungen/-kabel 23, 24 (nicht dargestellt), 25, einfacher handhab-/montierbar als eine starre Variante.

FIG 5 zeigt die Draufsicht der bestückten Hauptplatine 14 (ohne angeschlossene Leitungen/Kabel 23, 24, 25 (vgl. FIG 8)). FIG 5 zeigt die Oberseite der Hauptplatine 14 auf der alle Komponenten bestückt sind; auf der Rückseite der Hauptplatine 14 sind nur die Leiterbahnen.

Alle Anschlussleitungen/Kabel 23, 24 (nicht dargestellt), 25, wie die (23) für den Beschleunigungssensor 9, die (25) für die Energieversorgung 16 und die (24 (nicht dargestellt)) die Antenne 11, sind über Steckkontakte 26, 27, 28 realisiert, was für eine einfache und flexible Montage von Vorteil ist.

Am linken Rand der Hauptplatine 14, wie FIG 5 sie zeigt, ist der Anschlusssteckkontakt 26 für die Anschlussleitung 23 bzw. den Stecker 40 des Beschleunigungssensors 9. Unterhalb liegende (freie) Kontakte 29 können gegebenenfalls für weitere Sensorsignale genutzt werden.

Leicht links der Mitte der Hauptplatine 14, wie FIG 5 sie zeigt, ist der Microcontroller ($\mu$C) 10 mit verschiedenen Bauelementen platziert, welcher die Signale/Daten aus dem Beschleunigungssensor 9 ausliest.

Signale/Daten werden über SPI aus dem Beschleunigungssensor 9 ausgelesen, welcher - in diesem Fall - Werte für die zwei Messachsen, nämlich x und y, zur Verfügung stellt.

Wird mehr als ein Wert zu einem Zeitpunkt benötigt, so müssen alle Werte in einem Lesevorgang übertragen werden. Nach einem abgeschlossenen Lesevorgang werden die Werte vom Beschleunigungssensor 9 verworfen, und die chronologisch nachfolgenden für den nächsten Lesevorgang geladen.

Der Beschleunigungssensor 9 überträgt die Daten byteweise, wobei die einzelnen Werte jeweils aus zwei Byte bestehen. Zusätzlich überträgt der Beschleunigungssensor 9 zunächst den "hinteren Teil" des Gesamtwertes, danach den "vorderen", was durch die Software des Microcontrollers (pC) 10 zusammengesetzt werden muss. Die Daten werden durch den Microcontroller (pC) 10 aggregiert und für den Versand vorbereitet.

Rechts der Mitte der Hauptplatine 14, wie FIG 5 sie zeigt, sind zwei Möglichkeiten, d.h. Steckkontakte, zum Anschluss von Antennen, von denen bei dem ersten Werkzeughalter 1 eine (hier die obere bzw. der obere Steckkontakt 27) für die SMD-Antenne 11 genutzt wird, welche Signale/Daten an Außerhalb des Werkzeughalters 1, wie beispielsweise ein CMS weiterleitet/überträgt (Bluetooth-Übertragung).

Weiter rechts bei der Hauptplatine 14, wie FIG 5 sie zeigt, sind eine Mehrzahl von Programmierkontakten 30 zu sehen - und am rechten Rand der Hauptplatine 14 die Anschlüsse bzw. der Steckkontakt 28 zur Spannungs-/Energieversorgung 16.

Zum Schutz der Komponenten der Hauptplatine 14 können Vorder- und Rückseite der Hauptplatine 14 gegebenenfalls, wie FIG 4 verdeutlicht, mit einer Schutzfolie 42 abgeklebt sein.

- SMD-Antenne 11

Die Anbringung der auf der separaten Antennenplatine 15 (vgl. FIG 2) platzierten SMD-Antenne 11 am Werkzeughalter 1 erfolgt, wie die FIGen 1 und 2 zeigen, über eine Kreistasche 17 am Greiferbund 43, welche über eine - um Knicke in der Anschlussleitung 24 (nicht dargestellt) zu vermeiden - außermittige, schräge Verbindungs-/Anschlussbohrung 22 (für die Anschlussleitung 24 (nicht dargestellt)) mit der die Hauptplatine 14 aufnehmenden kreisförmigen Nut 33 in Verbindung steht.

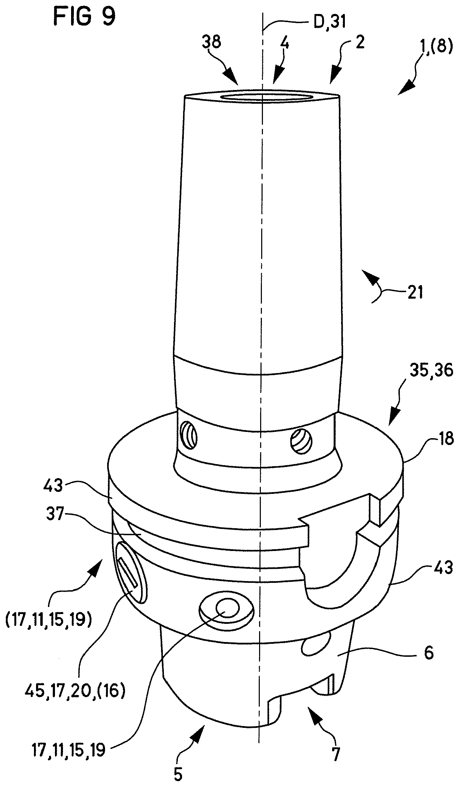

Gegebenenfalls kann eine zweite gegenüberliegende identische Kreistasche (17) im Greiferbund (43) eingebracht sein, um - einerseits die Wuchtgüte des Werkzeughalters 1 zu verbessern - und andererseits - andere Antennenkonzepte - mit zwei Antennen (11) (und gegebenenfalls dadurch verbesserter Sendeleistung) (vgl. hier FIG 9 bzw. Werkzeughalter 1 nach zweiter Ausführung mit zwei Drahtantennen 11) - realisierbar zu machen. Hierfür ist auf der Hauptplatine 14 bereits der zweite Antennenanschluss (hier weiterer Steckkontakt 27) vorgesehen (s. oben).

Zur Befestigung der Antennenplatine 15 in der Kreistasche 17 ist diese durch ein Silikon vergossen (19) (alternativ gedeckelt) bzw. kann die gleiche Silikon-Schutzbeschichtung 19 wie für die Hauptplatine 14 verwendet werden.

- Energieversorgung/Batterie 16

Die Anbringung der Energie-/Spannungsversorgung 16 bzw. der Batterie 16 erfolgt ähnlich wie die SMD-Antenne 11, wie die FIGen 1 und 2 zeigen, über eine weitere Kreistasche 17 (Batteriefach 45) am Greiferbund 43, welche - ebenfalls - über eine - um Knicke in der Anschlussleitung 25 zu vermeiden - außermittige, schräge Verbindungsbohrung 22 (für die Anschlussleitung 25) mit der die Hauptplatine 14 aufnehmenden kreisförmigen Nut 33 in Verbindung steht.

Die Befestigung der Batterie 16 im Batteriefach 45 erfolgt über einen verschraubbaren Deckel 20 (vgl. FIG 1), welcher - auf das Batteriefach 45 aufschraubbar - dieses verschließt und welcher gleichzeitig auch einen Kontakt zur Batterie 16 herstellt. Dieser Deckel 20 ermöglicht auch, dass die Batterie 16 von außen ausgetauscht werden kann.

Gegebenenfalls kann auch eine Dichtung (nicht dargestellt) bei dem Batteriefach 45 vorgesehen sein, welche das Batteriefach vor eindringender Flüssigkeit schützt (nicht gezeigt).

- **Werkzeughalter 1 mit Sensorik (FIG 9)**

FIG 9 zeigt eine weitere Ausführungsform eines erfindungsgemäßen Werkzeughalters 1, kurz nur zweiter Werkzeughalter 1.

Dieser weitere bzw. zweite Werkzeughalter 1 unterscheidet sich von diesem nach der ersten Ausführung, d.h. dem ersten Werkzeughalter 1 (vgl. FIGen 1 bis 8), nur dahingehend, dass er eine andere Art von Antenne 11 vorsieht.

Davon abgesehen sieht auch dieser zweite Werkzeughalter 1 den Beschleunigungssensor 9, wie nach erster Ausführung vor, wie auch alle anderen, hier im Folgenden aber nicht weiter erwähnten, aber im Zusammenhang mit dem ersten Werkzeughalter 1 beschriebenen Bauteile. Nähere Ausführung hierzu sind der Ausführung zum ersten Werkzeughalter 1 zu entnehmen.

Im Unterschied zur ersten Ausführung (hier wurde eine SMD - Antenne 11 in einer Kreistasche 17 am Umfang 21 des ersten Werkzeughalters 1 verbaut (vgl. FIG 2)) sieht, wie FIG 9 zeigt, dieser zweite Werkzeughalter 1 zwei Drahtantennen 11 vor, welche - jeweils ebenfalls in Kreistaschen 17 versenkt angeordnet - gleichmäßig verteilt am Umfang 21 des zweiten Werkzeughalters 1 angeordnet sind. Auch diese sind jeweils über Anschlussleitungen/Kabel mit der Hauptplatine bzw. dortigen Antennenanschlüssen/Steckkontakten 27 verbunden.

Auch hier können die Kreistaschen 17 am Umfang 21 des Werkzeughalters 1, welche die zwei Drahtantennen 11 aufnehmen, wieder durch ein Silikon (19) vergossen (alternativ gedeckelt) sein.

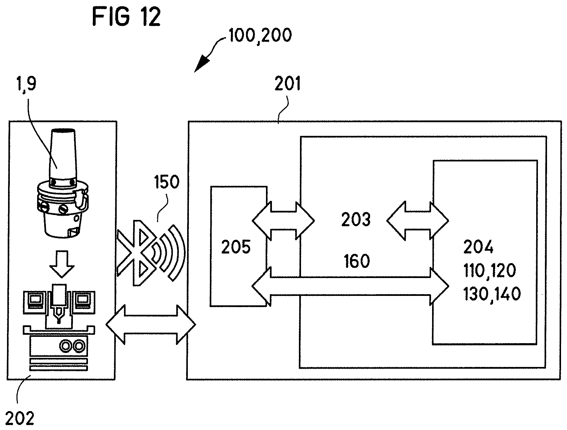

**- Zustandsüberwachung eines Werkzeugmaschinen-/Bearbeitungsmaschinenprozesses mittels eines Werkzeughalter 1 mit Sensorik (FIG 12 bis 14)**

FIG 12 zeigt eine schematische Darstellung eines Verfahrens 100 zur Überwachung eines Betriebsverhaltens eines Werkzeughalters 1 (Condition Monitoring (CM)), beispielsweise den Werkzeughalter 1 nach vorerwähnten Ausführungen (vgl. FIGen 1 bis 9).

FIG 12 zeigt dies in Form eines (Block-)Schaubildes einer Steuerungs-Regelungsanordnung 203 (als Teil des CM bzw. eines CMS 201) einer Werkzeugmaschine 202 (oder einer sonstigen Bearbeitungsmaschine), die mit einem der vorbeschriebenen Werkzeughalter 1 ausgeführt ist (- und so in der Lage ist, mittels des Beschleunigungssensors 9 Messdaten über den Bearbeitungsprozess zu liefern).

Wie vorstehend ausgeführt und in FIG 12 angedeutet, erfolgt die Signalübertragung 150 der von der sensorischen Werkzeugaufnahme 1 aufgenommenen, gegebenenfalls vorverarbeiteten Messsignale per Bluetooth an das CMS 201 bzw. dortige Regelungsanordnung 203. Diese ermöglicht eine ad-hoc-Reaktion auf eintretende und/oder noch nicht eingeschwungene Instabilitätszustände bzw. die Ausregelung solcher oder ähnlicher abnormaler Prozesszustände.

Dies erfolgt durch eine Echtzeit-Anpassung/Veränderung 160 von Bearbeitungsparametern bei der Werkzeugmaschine 202, wie beispielsweise Vorschub, Drehzahl u. Ä., wobei diese Anpassung/Veränderung 160 in Abhängigkeit von den (aus den Messsignalen/-daten des sensorischen Werkzeughalters 1 erkannten) Prozesszuständen, wie beispielsweise einer Vibration, eines Ratterns oder einem Krafteintrag am Werkzeug umgesetzt wird, wobei die Prozesszustände über Messsignale/-daten des sensorischen Werkzeughalters 1 erfasst - und an die Regelungsanordnung 203 übertragen werden.

Die Regelungsanordnung 203 besteht, wie FIG 12 zeigt, im Wesentlichen aus einer Datenerfassungs- und Auswerteeinheit 204, die über die Prozessstabilität (Normalität/Abnormalität (Prozessinstabilität)) urteilt 120 - und über die Regelungsanordnung 203 ggf. Bearbeitungsparameter der Werkzeugmaschine 202 verändert 160 -, sofern diese Prozessstabilität nicht einer Vorgabe (Normalität) entspricht.

Ein die Messsignale/-daten des sensorischen Werkzeughalters 1 empfangender (Bluetooth-)Empfänger 205 (Transceiver) des CMS 201 ist dabei über einen Echtzeitkanal mit dieser Datenerfassungs- und Auswerteeinheit 204 verbunden, was die Echtzeitfähigkeit des Systems ermöglicht.

Die Auswerteeinheit 204 erhält die Messdaten des - mit dem Werkzeughalter 1 mitbewegten/-rotierenden - Beschleunigungssensors 9, legt diese beispielsweise in einem Pufferspeicher ab und arbeitet zeitnah verschiedene Algorithmen, insbesondere die schon vorbeschriebene Bildung der Resultierenden R aus den Messachsensignale/-daten 110, für die Erkennung/Erfassung von Prozesszuständen 120 ab.

Die verwendeten Algorithmen sind so ausgelegt, dass auch festgelegt ist, unter welchen Bedingungen ein (automatischer) Eingriff 160 in die Steuerung der Werkzeugmaschine 202 erfolgt.

Ein Teil der Algorithmen ermittelt aus den Messsignale/-daten der sensorischen Werkzeugaufnahme 1 Prozesszustände.

Dabei wird insbesondere aus den zwei Messachsensignalen x, y des zweiachsigen Beschleunigungssensors 9 des Werkzeughalters 1, eine Resultierende (R) - und zwar nach folgender Vorschrift - gebildet:

$$R(x_i) = Sqr(Sum(x_i^2)) \tag{1}$$

mit:

$x_i$      Messachsensignal der Achse i, hier x und y

Sqr      Quadratwurzel

Sum      Summe.

Werden die Messachsensignale x, y des zweiachsigen Beschleunigungssensors 9 des Werkzeughalters 1 von einem rotierenden System geliefert, können diese gegebenenfalls einer Transformation 140, d.h. in diesem Fall einer Koordinatentransformation von dem rotierenden System des Werkzeughalters 1 in ein Inertialsystem, unterzogen werden.

Gegebenenfalls können dabei auch, um Messfehler, Messwerteausreißer u.Ä. in den Messachsensignalen x, y bzw. Messdaten auszuschließen, die Messachsensignale statistisch bearbeitet werden 130, beispielsweise geglättet.

Die Auswerteeinheit 204 legt dann insbesondere ihrer Analyse für die Erkennung/Erfassung von Prozesszuständen verschiedene Darstellungen der aufbereiteten bzw. ausgewerteten Messachsensignalen x, y bzw. Messdaten, wie insbesondere die Resultierende R - im Zeitverlauf und als Spektrogramm, zugrunde.

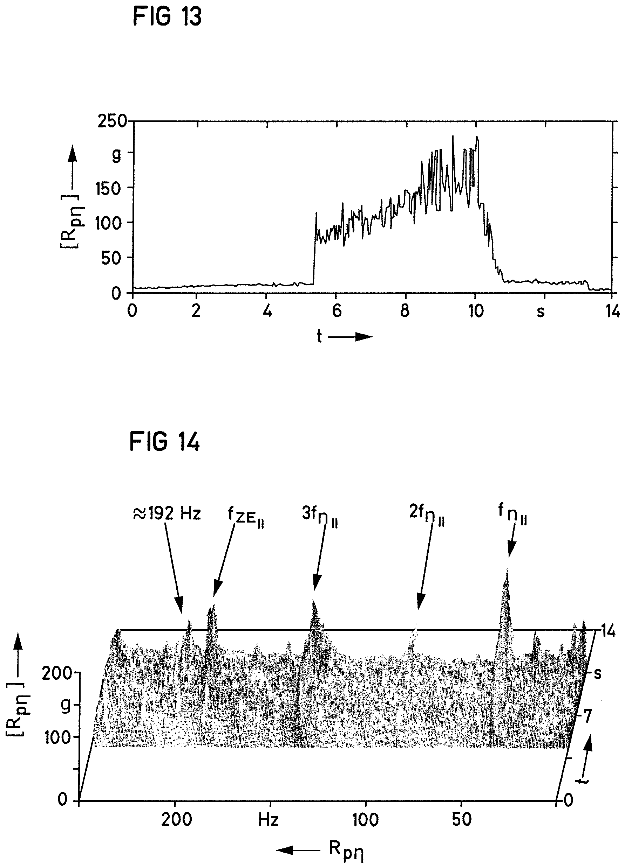

FIG 13 zeigt beispielsweise diese Resultierende R des sensorischen Werkzeughalters 1 im Zeitverlauf bei einem Bearbeitungsprozess (Fräsbearbeitung) (Abszisse: t (Zeit); Ordinate: Resultierende R bzw. deren Amplitude (Betrag der Resultierenden) als Vielfaches von der Normalbeschleunigung g). (Eine entsprechende Resultierende bzw. deren Verlauf ergibt sich auch bei einer Transformation ins Inertialsystem, wodurch hier der Einfachheit halber die "mitrotierenden Daten" betrachtet werden sollen).

Wie die Resultierende R (im Zeitverlauf) erkennen lässt, beginnt der Zahneingriff nach etwa 0,5 s und die Amplitude, d.h. der Wert der Resultierenden R, steigt nur gering.

Nach ca. 5,5 s ist ein sprunghafter Anstieg der Resultierenden R, hier um ca. 70 g, zu erkennen, was auf eine beginnende Instabilität, wie ein Rattern, im Prozess schließen lässt.

Nach ca. 10 s wird der Vorschub bis auf v = 0 mm/min reduziert, bis das Werkzeug ohne weitere Bewegung auf der Stelle rotiert (ca. 10,5 s). Ab diesem Zeitpunkt bleibt die Amplitude bzw. die Resultierende annähernd konstant, d.h. der Prozess befindet sich wieder in einem stabilen Zustand, bis die Motorspindel dann nach etwa 13,5 s komplett abgeschaltet bzw. zum Stillstand gebracht wird.

FIG 14 zeigt ein zur Resultierenden R nach FIG 13 zugehöriges Spektrogramm dieser Resultierenden R. Die Zeitachse (in t = Sekunden) verläuft hierbei von unten rechts nach rechts oben; die Frequenzen (in Hz) steigen von unten rechts nach unten links.

Hierbei ist, wie FIG 14 zeigt, als signifikanteste Frequenz die Drehfrequenz $f_{nII}$ = 45 Hz des Bearbeitungsprozesses und deren Vielfache zu erkennen. Die Zahneingriffsfrequenz $f_{ZEFII}$ = 180 Hz ist ebenfalls zu sehen, wobei sich diese immer auch als Vielfaches der Drehfrequenz darstellt.

Nach ca. 8 s taucht im Spektrum eine weitere Frequenz bei ca. 192 Hz auf, was als ein Merkmal für den instabilen Prozess bzw. das Rattern (vgl. oben zu FIG 13) interpretiert werden kann.

Die verwendete Resultierende R liefert so ein aussagekräftiges Abbild des Bearbeitungsprozesses bzw. der Prozesszustände. D.h., anhand dieser lässt sich (von der Auswerteanordnung 202) eindeutig eine Instabilität, wie hier das Rattern, erkennen.

Ein anderer Teil der Algorithmen verknüpft dann diese Prozesszustände mit Bearbeitungsparametern, wie beispielsweise Materialparametern u.Ä. und/oder Benutzereingaben, um zu entscheiden, ob ein Eingriff bei der Werkzeugmaschine 202 bzw. dem durch sie durchgeführten Bearbeitungsprozess zu erfolgen hat.

Ein weiterer Teil der Algorithmen adaptiert gegebenenfalls dann die Bearbeitungsparameter auf der Basis dieser Daten (vgl. oben - Reduktion des Vorschubs bis zur Stabilität des Bearbeitungsprozesses).

Über einen Echtzeitkanal ist dabei die Auswerteeinheit 204 mit der Werkzeugmaschinensteuerung 203 gekoppelt. Dadurch wird eine ad-hoc Anpassung/Veränderung von Maschinenvorschub und/oder Maschinendrehzahl und/oder Ähnlichem während der Bearbeitung ermöglicht.

Typische Anwendungen sind hier die Vermeidung und/oder Erkennung von Prozessfehlern, Prozessinstabilitäten, Rattern, Werkzeugbrüchen, Werkzeugverschleiß und so weiter.

Beim Auftreten einer Prozessinstabilität oder dergleichen werden so als Reaktion die Bearbeitungsparameter über die Werkzeugmaschinensteuerung 203 - automatisch und in Echtzeit - verändert 160.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

Bezugszeichenliste:

1 Werkzeughalter
2 (erstes, werkzeugseitiges) axiales Längsende
3 Werkzeugabschnitt
4 Werkzeugaufnahmeformation, Werkzeugaufnahmeausnehmung
5 (zweites, kopplungsseitiges) axiales Längsende
6 Kopplungsabschnitt

7 Kopplungsformation

8 Messvorrichtung

9 (Beschleunigungs-)Sensor

10 Microcontroller (pC)

11 Übertragungseinrichtung, Antenne, SMD-Antenne, Drahtantenne

12 Leiterplatte, Platine

13 (Sensor-)Platine

14 Hauptplatine

15 (Antennen-)Platine

16 Energieversorgung, Spannungsversorgung, Batterie

17 Versenkung, Kreistasche

18 Außenfläche

19 Verguss, Silikonmasse

20 Deckelung, Deckel (für Batteriefach)

21 Umfangrichtung (des Werkzeughalters (1)), auch Umfang

22 Anschlussbohrung, Verbindungsbohrung

23 Anschlussleitung (für Beschleunigungssensor)

24 Anschlussleitung (für Übertragungseinrichtung)

25 Anschlussleitung (für Energieversorgung)

26 Steckkontakt(-e) für die Anschlussleitung (für den Beschleunigungssensor)

27 Steckkontakt(-e) für die Anschlussleitung (für die Übertragungseinrichtung)

28 Steckkontakt(-e) für die Anschlussleitung (für die Energieversorgung)

29 freie Steckkontakte

30 Programmierkontakte

31 Axialrichtung

32 Radialrichtung

33 ring-/ringförmige Nut

34 Deckel (für ringförmige Nut)

35 (Werkzeughalter-)Grundkörper

36 Handhabungsformation

37 Greiferrille

38 zentrale Ausnehmung

39 Gehäuse (für die (Sensor-)Platine 13)

40 Stecker (für den Steckkontakt für die Anschlussleitung (für den (Beschleunigungs-)Sensor))

41 Stecker (für den Steckkontakt für die Anschlussleitung (für die Energieversorgung))

42 Schutzfolie

43 Greiferbund

44 Handhabungsformation, Greifervorrichtung

45 Batteriefach

100 Verfahren

110 Bildung des resultierenden Messachsensignals bzw. der Resultierenden R unter Verwendung der zumindest zwei Messachsensignale (x, y)

120 Überwachung/Erkennung/Beurteilung (von Prozesszuständen) unter Verwendung der Resultierenden R

130 statistische Bearbeitung

140 Transformation, Koordinatentransformation

150 Übertragung (über ein SPI - Schnittstelle)

160 Anpassung/Veränderung von Betriebsparameter

200 Intelligenter Werkzeughalter

201 CMS

202 Werkzeugmaschine, Bearbeitungsmaschine

203 Regelungsanordnung/Steuerungsanordnung (CMS)

204 Auswerteinheit (CMS)

205 Empfänger

R Resultierende

D Werkzeughalter-Drehachse, Drehachse

x Messachse, Messachsensignal

y Messachse, Messachsensignal

z Messachse, Messsachsensignal

ZEF zentrale Eingriffsfrequenz
$f_{nII}$ Drehfrequenz
$f_{ZEFII}$ Zahneingriffsfrequenz

**Patentansprüche**

1. Verfahren (100) zur Überwachung eines Betriebsverhaltens eines Werkzeughalters (1), welcher zur Rotation um eine eine axiale Richtung (31) definierende Werkzeughalter-Drehachse (D) ausgebildet ist und an seinem einen axialen Längsende (2) einen Werkzeugabschnitt (3) mit einer Werkzeugaufnahmeformation (4) zur Aufnahme eines Werkzeugs sowie an seinem anderen axialen Längsende (5) einen Kopplungsabschnitt (6) mit einer Kopplungsformation (7) zur Drehmoment übertragenden Kopplung mit einer Maschinenspindel einer Werkzeugmaschine aufweist und welcher eine Messvorrichtung (8) zur Erfassung von einen Betrieb des Werkzeughalters (1) betreffende Daten aufweist, welche Messvorrichtung (8) ein Sensor (9), insbesondere ein Beschleunigungssensor (9), mit zumindest zwei Messachsen (x, y), welche zwei Messachsen (x, y) im Wesentlichen radial (32) zur Werkzeughalter-Drehachse (D) ausgerichtet sind, ist, welcher zumindest zwei den zumindest zwei Messachsen (x, y) zugeordneten Messachsensignale (x, y) liefert,
bei dem
unter Verwendung der zumindest zwei Messachsensignale (x, y) ein resultierendes Messachsensignal (Resultierende R) gebildet (110) und die Überwachung unter Verwendung der Resultierenden R durchführt wird (120).

2. Verfahren (100) nach einem der voranstehenden Ansprüche **dadurch gekennzeichnet, dass** die Resultierende (R) nach folgender Vorschrift gebildet wird:

$$R(x_i) = Sqr(Sum(x_i^2)) \hspace{3cm} (1)$$

mit:

xi Messachsensignal der Achse i
Sqr Quadratwurzel
Sum Summe

((1) auch vektoriell, insbesondere bei nicht-orthogonal ausgerichteten Sensoren)

3. Verfahren (100) nach einem der voranstehenden Ansprüche
**dadurch gekennzeichnet, dass**
der Sensor (9) eine dritte Messachse (z) aufweist, wobei die dritte Messachse (z) im Wesentlichen axial (31) zur Werkzeughalter-Drehachse (D) ausgerichtet ist, der Sensor (9) so auch ein drittes der dritten Messachse (z) zugeordnetes Messachsensignal (z) liefert und insbesondere die Resultierende (R) auch unter Verwendung des dritten Messachsensignals (z) gebildet wird (110) und/oder das dritte Messachsensignal (7) separat ausgewertet wird.

4. Verfahren (100) nach einem der voranstehenden Ansprüche
**dadurch gekennzeichnet, dass**
rohe oder bearbeitete Messachsensignale und/oder Daten drahtlos an eine Auswerteeinheit, insbesondere an ein Condition Monitoring System (CMS), übertragen werden.

5. Verfahren (100) nach einem der voranstehenden Ansprüche
**dadurch gekennzeichnet, dass**
rohe oder bearbeitete Messachsensignale und/oder Daten statistisch bearbeitet werden, insbesondere geglättet, gefiltert oder einer Frequenzanalyse unterzogen werden (130).

6. Verfahren (100) nach einem der voranstehenden Ansprüche
**dadurch gekennzeichnet, dass**
rohe oder bearbeitete Messachsensignale und/oder Daten einer Transformation, insbesondere einer Koordinatentransformation von einem rotierenden System in ein Inertialsystem, unterzogen werden (140).

7. Verfahren (100) nach einem der voranstehenden Ansprüche

**dadurch gekennzeichnet, dass**
Signale und/oder Daten über eine SPI - Schnittstelle übertragen werden (150).

8. Verfahren (100) nach einem der voranstehenden Ansprüche
**dadurch gekennzeichnet, dass**
der Sensor (9) in der Werkzeughalter-Drehachse (D) oder nahe der Werkzeughalter-Drehachse (D) angeordnet ist.

9. Verfahren (100) nach einem der voranstehenden Ansprüche
**dadurch gekennzeichnet, dass**
Prozess- und/oder Betriebsparameter einer sich mit dem Werkzeughalter (1) in einen Bearbeitungsprozess/-betrieb befindender Werkzeugmaschine (202) automatisch in Abhängigkeit der Überwachung angepasst und/oder verändert werden (160).

10. Verfahren (100) nach einem der voranstehenden Ansprüche
**dadurch gekennzeichnet, dass**
der Werkzeughalter (1) weitere Elektronikbauteile, insbesondere einen Mikrocontroller (10), eine oder mehrere Übertragungseinrichtungen (11), insbesondere eine oder mehrere Antennen (11), eine oder mehrere Leiterplatten (12, 13, 14, 15) und/oder eine oder mehrere Energieversorgungen (16) aufweist.

11. Verfahren (100) nach einem der voranstehenden Ansprüche
**dadurch gekennzeichnet, dass**
die Werkzeugaufnahmeformation (4) ein Schrumpffutter oder ein Hydrodehnspannfutter oder eine Messerkopfaufnahme oder ein Spannzangenfutter oder ein Kraftspannfutter ist und/oder dass die Kopplungsformation (6) einen Hohlschaftkegel oder einen Steilkegel oder/und eine Eingriffsformation für ein Kugelspannsystem umfasst.

12. Verfahren (100) nach einem der voranstehenden Ansprüche eingesetzt zu
einer Erkennung eines abnormalen Betriebs-/Prozesszustands, insbesondere einer Instabilität und/oder eines Ratterns und/oder eines Verschleißes und/oder Bruches bei einem/eines in dem Werkzeughalter (1) aufgenommenen Werkzeugs, wobei die Erkennung mittels einer Analyse unter Verwendung der Resultierenden (R) erfolgt.

13. Verfahren (100) nach einem der voranstehenden Ansprüche eingesetzt zu
einer Erkennung eines Rundlauffehlers, wobei eine Grundlast $a_{zp}$ analysiert wird.

14. Verfahren (100) nach einem der voranstehenden Ansprüche eingesetzt zu
einer automatischen Werkzeugmaschinensteuerung, wobei Prozess- und/oder Betriebsparameter der sich mit dem Werkzeughalter (1) in einen Bearbeitungsprozess/-betrieb befindenden Werkzeugmaschine (202) automatisch in Abhängigkeit der Überwachung angepasst und/oder verändert werden (160).

15. Intelligenter Werkzeughalter (200) mit zumindest einem Werkzeughalter (1), welcher zur Rotation um eine eine axiale (31) Richtung definierende Werkzeughalter-Drehachse (D) ausgebildet ist und an seinem einen axialen Längsende (2) einen Werkzeugabschnitt (3) mit einer Werkzeugaufnahmeformation (4) zur Aufnahme eines Werkzeugs sowie an seinem anderen axialen Längsende (5) einen Kopplungsabschnitt (6) mit einer Kopplungsformation (7) zur Drehmoment übertragenden Kopplung mit einer Maschinenspindel einer Werkzeugmaschine aufweist und welcher eine Messvorrichtung (8) zur Erfassung von einen Betrieb des Werkzeughalters (1) betreffende Daten aufweist, welche Messvorrichtung (8) ein Sensor (9), insbesondere ein Beschleunigungssensor(9), mit zumindest zwei Messachsen (x, y), welche zwei Messachsen (x, y) im Wesentlichen radial (32) zur Werkzeughalter-Drehachse (D) ausgerichtet sind, ist, welcher zumindest zwei den zumindest zwei Messachsen (x, y) zugeordneten Messachsensignale (x, y) liefert, sowie mit einer Auswertungseinheit (204), welche eingerichtet ist, ein Verfahren (1) nach einem der voranstehenden Ansprüche auszuführen, insbesondere einem Condition Monitoring System (CMS 201) .

FIG 1

38  4  2
3  1,(8)
35,36
43
37
21
43
18
45,17,20,(16)
6
(19),17,11,15
5  31  7
D

FIG 2

1,(8)
D,31
43  37
43  18
35,36  (19),17,(11),(15)
5  45,17,(16)
21
6
7

1,(8)
38  D,31  39  22  43
33  18
22  37
34  35,36
6
21
7,5

FIG 3

FIG 4

FIG 5

FIG 6

FIG 7

23

40

9

13,12

FIG 8

10    27    14,12

40,26    41,28

23    25

27

13,12    27    42

FIG 9

FIG 10

FIG 11

FIG 12

## FIG 13

## FIG 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **F. BLEICHER et al.** In-Process Control with a Sensory Tool Holder to Avoid Chatter. *Journal of Machine Engineering,* 2018, vol. 18 (3), 16-27
- **P. SCHÖRGHOFER et al.** Using Sensory Tool Holder Data for Optimizing Production Processes. *Journal of Machine Engineering,* 2019, vol. 19 (3), 43-55

- **F. BLEICEHR et al.** Method for Determining Edge Chipping in Milling based on Tool Holder Vibration Measurements. *CIRP Annals - Manufacturing Technology,* 2020, vol. 69, 101-104